Europäisches Patentamt

**European Patent Office**

**Office européen des brevets**

(11) Publication number: **0 245 578**
**B1**

# EUROPEAN PATENT SPECIFICATION

(45) Date of publication of the patent specification:
29.08.90

(51) Int. Cl.⁵: **A46B 5/06**, A46B 7/10

(21) Application number: 86830326.4

(22) Date of filing: 06.11.86

(54) A rotary brush structure for a motor vehicle washing installation.

(30) Priority: 09.05.86 IT 2037486

(43) Date of publication of application:
19.11.87 Bulletin 87/47

(45) Publication of the grant of the patent:
29.08.90 Bulletin 90/35

(84) Designated Contracting States:
AT BE CH DE FR GB LI NL SE

(56) References cited:
GB-A- 204 733
GB-A- 976 459
US-A- 3 643 282

(73) Proprietor: FAVAGROSSA EDOARDO & FIGLIO & C.
S.n.c., Via Lepanto, 51, I-26040 Roncadello
(Cremona)(IT)

(72) Inventor: Favagrossa, Edoardo FAVAGROSSA
EDOARDO E FIGLIO &, C. S.n.c. Via Lepanto, 51,
I-26040 Roncadello(Cremona)(IT)

(74) Representative: Cicogna, Franco, Ufficio Internazionale
Brevetti Dott.Prof. Franco Cicogna Via Visconti di
Modrone, 14/A, I-20122 Milano(IT)

# Description

The present invention relates to a rotary brush structure for a motor vehicle washing installation which brush is capable of performing an effective cleaning action by removing particles of dirt from the bodywork of a motor vehcile being washed by the installation.

Automatic motor vehicle washing installations, that is to say those installations equipped for performing motor vehicle washing operations in an almost automatic manner, have recently experienced a considerable development. The basic equipment of such motor vehicle washing installations comprises a series of rotary brushes arranged in suitable positions on horizontal and vertical axes above and on either side of a space into which a motor vehicle to be washed is positioned.

The brushes of a motor vehicle washing installation have a plurality of relatively long tufts, usually formed of groups of synthetic fibres, the function of which is to perform a mechanical rubbing on the bodywork of the motor vehicle, in such a way as to remove the dirt from it.

In fact, when such washing brushes are put into rotation, the said tufts are held out substantially radially of the brush by the action of the centrifugal force, and when they come into contact with a motor vehicle body they perform a continual rubbing action on the surfaces of the motor vehicle body contacted thereby. This rubbing action, however, whilst being able to move the particles of dirt, does not do any more than transfer these particles from one part of the motor vehicle body to another. Consequently, the said dirt particles remain in practice on the motor vehicle body itself, and if such dirt particles are abrasive, for example grains of sand, they can give rise to a very damaging effect on the paintwork of the motor vehicle body.

For example the US-A 3 643 282 reference discloses a rotary brush structure for a motor vehicle warhing installation, having a series of flexible strips like elements dimenrioned in such a way that they can be wrapped in adjacent posstrous around a tubular lose and having, ou a first face thereof, a plurality of cylindrical sockets distributed over the surface of said one fache of the element, in which sockets are received respective groups of synthetic fibres, constituting tufts of the brush itself.

· The present invention seeks therefore to overcome this problem by providing a rotary brush structure for a motor vehicle washing installation which is able effectively to remove particles of dirt from a motor vehicle body subjected to washing thereby.

According to the present invention, the above aim is achieved by a rotary brush structure for a motor vehicle washing installation, according to the main claim.

One advantage of the present invention is that of providing a rotary brush structure for a motor vehicle washing installation, which is constructionally simpler than similar brushes of conventional type, and therefore which is economically more advantageous.

Another advantage of the present invention is that of providing a rotary brush structure for a motor vehicle washing installation, which is able to offer the widest guarantees of reliability and safety in use.

One embodiment of the invention will now be more particularly described, by way of example, with reference to the accompanying drawings in which:

Figure 1 is a schematic front view of a motor vehicle washing station equipped with a number of brushes formed as embodiments of the invention;

Figure 2 is a rear view of a strip-like element from which a brush according to the invention may be formed; and

Figure 3 is a section taken on the line III-III shown in Figure 2.

Referring now to the drawings, the rotary brush for motor vehicle washing installations is generally indicated with the reference numeral 1; the brush is constituted by a suitably dimensioned substantially rectangular strip-like element 2 made of suitable elastomeric materials in such a way as to have an adequate flexibility. On one of the faces of this strip-like element 2 there are formed a plurality of cylindrical projecting sockets 3 of limited height uniformly spaced over the whole of the surface area of the element 2, whilst on the opposite face there are formed cylindrical studs 4 which contact a cylindrical core around which the strip-like element is wrapped to form a brush.

The strip-like element 2 has an elongate rectangular shape which, at one end, is provided with apertures 5 provided with a cylindrical rim in the form of a tubular flange which can be introduced into cooperating plain holes 6 of corresponding shape and dimension formed in the opposite end. These cooperating flanged apertures 5 and plain holes 6, in practice, allow the said strip-like element to be locked onto a conventional tubular support core 7 by means of screws, rivets or other fitting elements introduced into the apertures 5 and the holes 6 with the flanges of corresponding apertures also introduced into the respective holes 6.

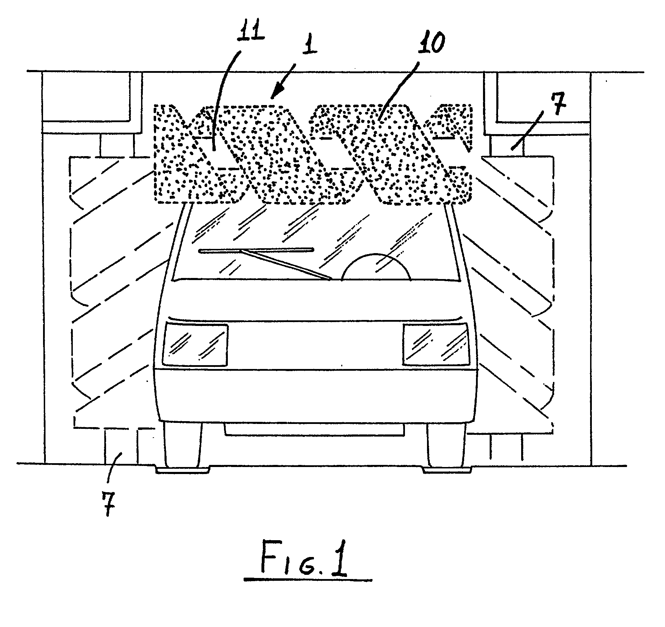

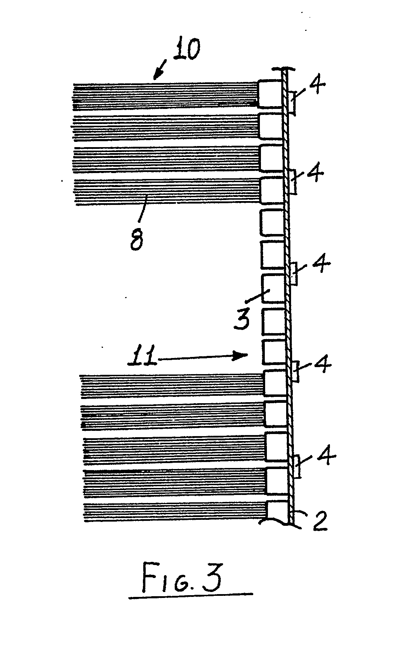

The cylindrical sockets 3 over the surface of the strip-like element 2 receives groups or sets of synthetic fibres 8 of polyethylene or other suitable plastics material, which are fixed in position by means of a stitching thread 9 which, as is shown in Figure 2, binds together the fibres of each set obtaining the desired compactness and uniformity of the structure: compactness and uniformity are also determined by the fact that each group is constituted by the same number of fibres. In particular, groups or sets of fibres are introduced and fixed into only some of the cylindrical sockets 3 in such a way as to form bundles of tufts or bristles 10 which, as can be seen in Figure 2, extend in two triangular areas of the element 2 and are separated by a diagonal strip 12 where there are no tufts and the sockets 3 are left empty. When the strip-like element 2 is wrapped around a core 7 the short edges thereof, which bear the flanged apertures 5 and plain holes 6, are parallel to the axis of the core 7, and the two triangular areas of tufts effectively form part of an effectively helically extending row 10 of sets of tufts with a helical space 11 separating adjacent turns of the row 10. Of course, it will be appreciated that to form a rotary brush such as that shown in Figure 1, general strip-like elements 2 such as that shown in Figure 2 would be fitted to a core 7 in side-by-side adjacent configuration. By means of this arrangement, in practice, the brush thus formed is able during rotation to generate an effectively axial component of movement which draws all the dirt particles axially of the brush and thus entirely removes them from the motor vehicle body.

Regardless of whether the brush is disposed with its axis horizontal or vertical, it behaves in form as a conveyor screw or auger and therefore ensures an effective removal of the particles leaving the motor vehicle body perfectly clean.

## Claims

1. A rotary brush structure for a motor vehicle washing installation, comprising a series of flexible strip-like elements (2) dimensioned in such a way that they can be wrapped in adjacent positions around a tubular core (7) and having, on a first face thereof, a plurality of cylindrical sockets distributed over the surface of said one face of the element, in which sockets (3) are received respective groups (8) of synthetic fibres, constituting tufts of the brush itself, characterized in that said groups of synthetic fibres are received in selected such sockets (3) in such a way as to form, on the rotary brush thus formed, a continuous row of tufts extending helically over the surface of the brush with adjacent turns of the helical row being separated by a helical strip (11) in which there are no tufts.

2. A rotary brush structure according to Claim 1, characterized in that said strip-like element (2) is made from an elastomeric material, has a generally rectangular shape and, at one end, has a plurality of cylindrical flanged apertures (5) the flanges of which constitute a projecting tubular rim surrounding the associated aperture at the opposite end, the strip-like element (2) having a plurality of plain holes (6) in positions corresponding to the flanged apertures (5) engaged thereby when the element (2) is wrapped around a tubular support core (7) whereby it can be secured to the core (7) by means of screws, rivets or similar such fixing elements inserted into the flanged apertures (5) and the plain holes (6).

3. A rotary brush structure according to Claim 1 or 2, characterized in tha-t groups (8) of synthetic fibres of polyethylene or other suitable plastics materials are inserted into said cylindrical sockets (3) and fixed in position by means of a stitching thread (9) which is disposed on the face of the flexible strip-like element (2) opposite said first face.

## Patentansprüche

1. Struktur einer Drehbürste für Autowaschanlage mit einem Satz streifenförmiger flexibler Elemente (2), die so bemessen sind, daß sie aneinander liegend um einen rohrförmigen Kern (7) gewickelt werden können und auf einer ersten Seite mehrere auf die Fläche dieser Elementseite verteilte zylinderförmige Aufnahmen vorgesehen sind, wobei in diesen Aufnahmen (3) entsprechende Gruppen (8) synthetischer Fibern aufgenommen sind, die dieselbe Bürsteborste bilden, dadurch gekennzeichnet, daß die obigen Gruppen synthetischer Fibern in den obigen Aufnahmen (3) aufgenommen sind, die so gewählt sind, um auf die so geformte Drehbürste eine kontinuierliche Borstenreihe zu bilden, die sich spiralförmig auf die Bürstenfläche erstreckt, so daß die anliegenden Runde der spiralförmigen Reihe aus einem borstenfreien spiralförmigen Streifen (11) getrennt sind.

2. Struktur einer Drehbürste nach Anspruch 1, dadurch gekennzeichnet, daß das obengenannte Streifenelement (2) aus Elastomerstoff ist und eine im allgemeinen rechteckige Form hat und, an einem Ende mit mehreren zylindrisch angeflanschten Öffnungen (5) vorgesehen ist, deren Flansche einen die vereinigte Öffnung umfassende vorspringende rohrförmige Rand bilden, wobei an dem anderen Ende, das streifenförmige Element (2) mehreren flachen Löcher (6) versehen, die entsprechend den angeflanschten Öffnungen (5) eingestellt, und, als das Element (2) um ein rohrförmige Lagerkern (7) umgehüllt ist, in derselben Öffnungen eingegriffen sind, so daß es mit dem Kern (7) durch Schrauben, Niete und dergleichen in der angeflanschten Öffnungen (5) und der flachen Löcher (6) eingefügten Befestigungselemente fest verbunden werden kann.

3. Struktur einer Drehbürste nach Anspruch 1 oder 2, dadurch gekennzeichnet, daß in der obengenannten zylinderförmigen Aufnahmen (3) Gruppen (8) synthetischer Fibern aus polyethylen oder anderen geeigneten Kunststoffen eingefügt sind und durch ein auf einer . Seite des biegbaren streifenförmigen Elementes (2) angeordnete Nähgarn (9) entgegengesetzt der obengenannten ersten Seite befestigt sind.

## Revendications

1. Structure de brosse tournante pour installation de lavage de voitures, comprenant une série d'éléments flexibles en forme de bande (2) ayant une telle dimension de pouvoir être enroulés dans positions adjacentes autour d'un noyau tubulaire (7) et présentant sur une première face plusieurs logements cylindriques partagés sur la surface dudit côté de l'élément, dans lesquels logements (3) de bottes respectives (8) de fibre synthétiques formant le poil de la brosse elle-même sont accueillies, caractérisée en ce que lesdites bottes de fibres synthétiques sont accueillies dans lesdits logements (3) choisis de façon de former, sur la brosse tournante ainsi constituée, un rang continu de poil s'étendant hélicoïdalement sur la surface de la brosse avec les tours adjacents du rang hélicoïdale séparés par une bande hélicoïdale (11) où il n'y a pas de poil.

2. Structure de brosse tournante selon la revendication 1, caractérisée en ce que ledit élément (2) en forme de bande est fait d'un matériel élastoméri- que, a une forme en général rectangulaire et, à l'une de ses extrémités, présent plusieurs ouvertures (5) bordées cylindriques, dont les bords forment une bride tubulaire saillante entourant l'ouverture Y associée, à l'extrémité opposée l'élément (2) en forme de bande présentant plusieurs trous plans (6) se trouvant dans positions correspondant aux ouvertures bridées (5) engagées par ceux-là comme l'élément (2) est entouré autour d'un noyau de support tubulaire (7) c'est pourquoi il peut être fixé au noyau (7) au moyen de vis, rivets ou d'autres éléments similaires de fixage insérés dans les ouvertures bridées (5) et les trous plans (6).

3. Structure de brosse tournante selon la revendication 1 ou 2, caractérisée en ce que bottes (8) de fibres synthétiques en polyéthylène ou d'autre matériel plastique approprié, sont insérées dans lesdits logements cylindriques (3) et sont fixées en position au moyen d'un fil à coudre (9) et arrangées sur une face de l'élément flexible (2) en forme de bande opposée à ladite première face.

Fig. 1

FIG. 3